# EUROPEAN PATENT SPECIFICATION

(11) **EP 0 973 404 B1**
(45) Date of publication and mention of the grant of the patent: **28.09.2005**
(21) Application number: 98912816.0
(22) Date of filing: 07.04.1998
(51) Int. Cl.: A23C 3/037

(54) **A METHOD AND A DEVICE FOR HEATING A LIQUID**
VERFAHREN UND VORRICHTUNG ZUR HEIZUNG EINER FLÜSSIGKEIT
PROCEDE ET DISPOSITIF DE CHAUFFAGE D'UN LIQUIDE

(30) Priority: 11.04.1997 NL 1005796
(43) Date of publication of application: 26.01.2000
(73) Proprietor: Den Hollander Licenties B.V., 4205 KM Gorinchem (NL)
(72) Inventor: Den Hollander, Adriaan Gerrit, 4205 KM Gorichem (NL)
(74) Representative: Vernout, Robert
(86) International application number: PCT/NL1998/000196
(87) International publication number: WO 1998/046087

(56) References cited:
- EP-A- 0 213 644
- WO-A-93/12673
- GB-A- 855 206
- GB-A- 1 420 635
- US-A- 3 433 147
- US-A- 4 161 909
- US-A- 4 375 185
- US-A- 5 092 230
- US-A- 5 389 335
- MCCARTHY K L ET AL: "AN INTEGRAL METHOD ANALYSIS OF STEAM INFUSION HEATING OF A FREE FALLING FILM" JOURNAL OF FOOD SCIENCE, vol. 54, no. 3, May 1989, pages 734-737, 747, XP000032269
- JONG DE P ET AL: "PERFORMANCE OF A STEAM-INFUSION PLANT FOR HEATING MILK" NETHERLANDS MILK AND DAIRY JOURNAL, vol. 48, no. 4, 1 January 1994, pages 181-199, XP000491400
- BURTON H: "ULTRA-HIGH-TEMPERATURE PROCESSING OF MILK AND MILK PRODUCTS " 1988 , ELSEVIER , LONDON XP002085458 see page 111 - page 119
- NB. FREY: "Unit process energy requirements for steam infusion UHT milk processing" TRANSACTIONS OF THE ASAE, vol. 27, no. 6, 1984, pages 1956-1959, XP002085471
- SCHAAFSMA J ET AL: "VEILIGE WARMTEBEHANDELING MET STOOMINFUSIE DOOR MULTIVARIABEL REGELEN" VOEDINGSMIDDELEN TECHNOLOGIE, vol. 28, no. 14/15, 13 July 1995, pages 17-19, XP000512288

## Description

The invention relates to a method for heating a liquid in a continuous process, wherein the liquid is moved in downward direction in a free fall from a supply plate in a closed vessel, and carried out of said vessel via a discharge valve, wherein steam for heating the falling liquid is introduced into the vessel, which steam at least partially condenses in the liquid, wherein liquid is collected in a container at the bottom of the vessel, which liquid is stored in said container for some time before being discharged via the discharge valve, wherein the level of the liquid in the container is measured, and the discharge valve is controlled in dependence on the measured liquid level. A method of this kind is described in WO 93/12673 by the same applicant.

By means of such a method, a liquid can be quickly heated to a predetermined temperature, and be briefly maintained at that temperature, for example for a fraction of a second or for a few seconds, after which the liquid can be discharged via the discharge valve, for example to an expansion vessel, where the temperature of the liquid is quickly reduced. The use of such a method makes it possible for example to extend the storage life of milk, because bacteria in the milk are killed by said heating, whilst the short duration of the heating process does not affect the taste of the milk.

In order to achieve an optimum result, it is important that the temperature of the liquid during heating and the period of time during which the liquid is subjected to a high temperature are accurately controlled.

By collecting the liquid, which has been heated to the desired temperature while falling down from the supply plate, in a container and storing it therein for some time, the period of time during which the liquid is subjected to a high temperature can be set as desired. Said period includes at least part of the time it takes for the liquid to fall from the supply plate to the container, plus the storage time of the liquid in the container.

The level of the liquid in the container is measured, and the discharge valve is controlled in dependence on the measured level, so that a desired liquid level in the container can be maintained by controlling the discharge valve. The liquid level can thereby be maintained at a constant predetermined value, which value, in combination with the volume of the liquid flow to the vessel, determines the residence time of the liquid in the vessel. Possibly it will be necessary thereby to take into account the fact that at least part of the steam being supplied to the vessel will condense, but the amount of liquid which is produced as a result of that is relatively small.

The object of the invention is to provide a method wherein the various parameters of the process can be controlled in an efficient, reliable and accurate manner.

In order to accomplish that objective, the level of the liquid in the container is measured by means of a differential pressure gauge, which measures the difference in pressure in the vessel between a location near the bottom side of the container and a location above the container, which difference in pressure is substantially caused by the liquid column in the container above said location near the bottom side of the container. In practice it has become apparent that this measurement makes it possible to determine the level of the liquid in the container in a reliable manner, in particular in a more reliable manner than is possible with a method wherein absolute values of a pressure are measured.

Furthermore, this method for determining the liquid level in the container appears to be more accurate and reliable than measurements wherein the liquid level is measured directly, in a manner which is known per se for that matter.

Preferably it can be determined by means of a sensor whether a specified location in the container is below or above the liquid level, so that means for determining the liquid level in the container can be calibrated by varying the liquid level during measuring, in such a manner that the liquid level will pass said specified location. In this way it is possible to compensate for any deviations of the pressure measurements, which may be caused by the fouling of the pressure sensor, for example as a result of deposition of solids thereon. The calibration of the differential pressure measurement may take place every day, for example, or each time the process is started, whereby the discharge valve reduces the amount of liquid being discharged until the liquid level passes the specified location of the aforesaid sensor, at which moment the differential pressure gauge is reset at the value associated therewith.

The invention furthermore relates to a device for carrying out any one or more of the aforesaid methods.

Further aspects of the invention are disclosed in the description of the figures and defined in the claims.

Hereafter a few embodiments of a device for treating a liquid will be described by way of illustration with reference to the drawing.
Figure 1 shows a device for treating a liquid, which device comprises a container for storing liquid;
Figure 2 shows another embodiment of a container; and

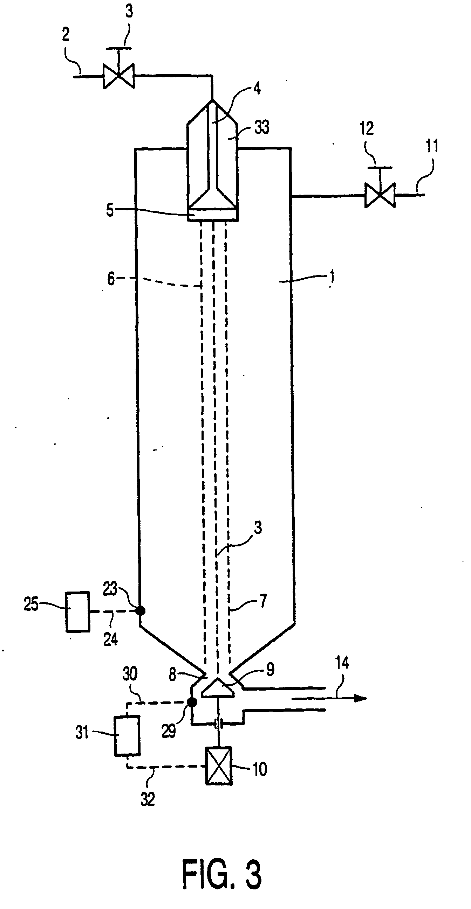

Figure 3 shows another device for treating a liquid.

The various figures are merely diagrammatic representations, wherein corresponding parts are indicated by the same numerals.

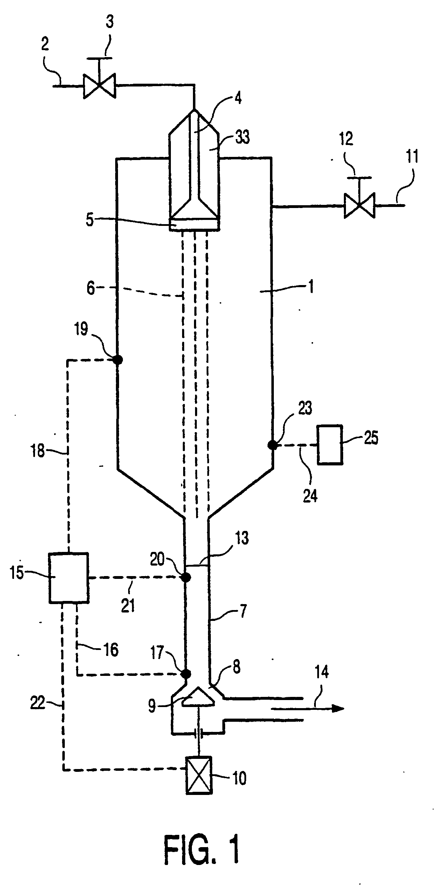

Figure 1 shows a vessel 1, in which a liquid can be subjected to a heat treatment. Said liquid is supplied via supply pipe 2, and the volume of the liquid flow to vessel 1 can be controlled by means of supply valve 3. The liquid is carried, via pipe 4, to supply plate 5, which is provided with a number of passages, so that the liquid being supplied falls down in a number of jets from supply plate 5. Said jets are diagrammatically indicated in the figures by means of dashed lines 6. The passages in supply plate 5 are not shown in the figures, they have a diameter of for example 3 mm.

According to Figure 1, vessel 1 is provided on the bottom side with a container 7 in the form of an upwardly extending round tube, which has a diameter which is much smaller than the cross dimension of vessel 1. A closable opening 8 is present on the bottom side of container 7, the through-flow area of which can be adjusted and controlled by means of a valve member 9, which can be moved by means of a driving motor 10.

Figure 1 furthermore shows a supply pipe 11 for supplying steam to vessel 1, whereby the volume of the supply flow is controlled by means of controllable supply valve 12. Inside the vessel 1, the liquid, which moves in downward direction in jets 6, is heated by the steam being supplied, whereby at least part of said steam condenses in the liquid. The fallen liquid is collected in container 7 and temporarily stored therein, because a predetermined liquid level 13 is maintained therein by means of valve member 9. The volume of the liquid supply flow and the liquid level 13 in container 7 determine the residence time of the liquid in vessel 1. After the liquid has passed discharge valve 8, 9, the liquid is carried to an expansion vessel, not shown, where the liquid is cooled. Arrow 14 indicates the direction of the liquid being discharged..

In the device which is shown in Figure 1, the liquid level 13 is determined by means of a differential pressure gauge 15, which is connected, by means of line 16, to a pressure sensor 17 near the bottom side of container 7, and which is connected, via a line 18, to a pressure sensor present above container 7. The difference between the pressure measured by sensor 17 and the pressure measured by sensor 19 is a measure for liquid level 13.

The device according to Figure 1 is furthermore provided with a sensor 20, which is connected to a differential pressure gauge 15 by means of line 21. Sensor 20 is a measuring device, which detects whether liquid level 13 is present above or under the location where sensor 20 is present. In fact, sensor 20 detects whether a gas or a liquid is present in the container at the location of said sensor. The determination of liquid level 13 by means of the differential pressure measurement by sensors 17, 19 can be calibrated by detecting from time to time that the liquid level 13 is located at the level of sensor 20, at which moment the differential pressure measurement is set to the associated value. In order to maintain a desired liquid level 13, driving motor 10 is controlled, via line 22, by means of differential pressure gauge 15.

The supply of steam via pipe 11 can be adjusted by means of controllable valve 12, for example in dependence on the gas pressure that prevails in vessel 1.

The amount of liquid being supplied can be changed during the process by means of supply valve 3, whilst the residence time of the liquid in vessel 1 can be maintained at a constant level by changing the liquid level 13 as well, , which is done by controlling driving motor 10. A specified liquid level 13 is used in conjunction with each volume of the liquid supply flow, so that a predetermined residence time can be obtained.

The device according to Figure 1 is furthermore provided with an infrared sensor 23, which is connected to a control device 25 by means of line 24. The infrared sensor 23 is directed at the jets 6 of the liquid, so that the temperature of said liquid jets can be measured in a reliable manner. Control device 25 may also adjust other components of the device, for example steam supply valve 12.

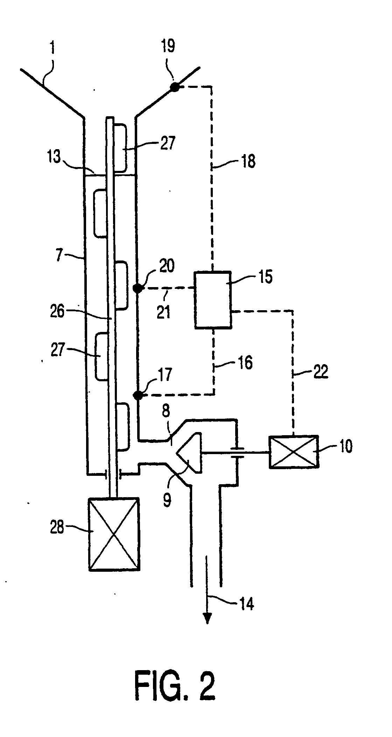

Figure 2 shows another embodiment of container 7, wherein discharge valve 8,9 is positioned beside the bottom side of container 7. The difference with the device according to Figure 1 is the presence of a stirrer 26, which stirrer is driven by means of a driving motor 28. Said stirrer is capable of preventing solids from depositing on the wall of container 7, especially when the liquid is not very stable. In this way it possible to prevent sensors 17, 20 from becoming fouled to such an extent that their detection accuracy is affected. Stirrer 26 furthermore provides an even temperature distribution within the stored liquid, thereby preventing prolonged contact between the liquid and the wall of container 7, so that the heat exchange that occurs thereby will not have any negative consequences for the liquid.

A space 33 is depicted to be present round pipe 4 in figure 1, which space forms an insulation space between pipe 4 and the interior of vessel 1. The fact is that the liquid must not be heated before it has left supply plate 5. To that end, plate 5 may be made of a material which does not conduct heat very well, so that there will be hardly any heating, if at all, of the liquid during the time that said liquid is present in the passages of supply plate 5.

The illustrated embodiments are to be considered as mere examples, also other embodiments are possible.

## Claims

1. A method for heating a liquid in a continuous process, wherein the liquid is moved in downward direction in a free fall from a supply plate (5) in a closed vessel (1), and carried out of said vessel (1) via a discharge valve (9), wherein steam for heating the falling liquid is introduced into the vessel (1), which steam at least partially condenses in the liquid, wherein liquid is collected in a container (7) at the bottom of the vessel, which liquid is stored in said container (7) for some time before being discharged via the discharge valve (9), wherein the level of the liquid in the container (7) is measured, and the discharge valve (9) is controlled in dependence on the measured liquid level, **characterized in that** the level of the liquid is measured by means of a differential pressure gauge (15), which measures the difference in pressure in the vessel (1) between a location (17) near the bottom side of the container (7) and a location (19) above the container (7).

2. A method according to claim 1, **characterized in that** the discharge valve (9) is controlled in such a manner that the liquid level is maintained at a constant predetermined value.

3. A method according to any one of the preceding claims, **characterized in that** it is determined by means of a sensor (20) whether a specified location (20) in the container (7) is below or above the liquid level.

4. A method according to claim 3, **characterized in that** the means (15) for determining the liquid level in the container (7) are calibrated by varying the liquid level during measuring, in such a manner that the liquid level will pass said specified location (20).

5. A method according to any one of the preceding claims, **characterized in that** the residence time of the liquid in the vessel (1) is regulated by measuring the liquid supply flow and setting a predetermined liquid level in dependence thereon, which is done by controlling the discharge valve (9).

6. A method according to any one of the preceding claims, **characterized in that** the liquid flow to the vessel is reduced during the process, and that the liquid level in the container (7) is reduced in proportion to said reduction thereby.

7. A method according to any one of the preceding claims, **characterized in that** the liquid which is stored in the container (7) is additionally stirred by means of a stirrer (26).

8. A device for heating a liquid in a continuous process, which device comprises a closed vessel (1), wherein the liquid can be moved in downward direction in a free fall from a supply plate (5) and be carried out of said vessel (1) via a discharge valve (9), means for supplying steam to the vessel (1) for heating the falling liquid, wherein a container (7) is present at the bottom of the vessel (1), in which container (7) fallen liquid can be collected and be stored for some time before being discharged via the discharge valve (9), and wherein the device further comprises means (15) for measuring the level of the liquid in the container (7), and means (15) for controlling the discharge valve in dependence on the measured liquid level, **characterized in that** said means for measuring the level of liquid in the container (7) comprises a differential pressure gauge (15) comprising a sensor (17) which is present at a location (17) near the bottom side of the container (7) and a sensor (19) which is present at a location (19) above said container (7).

9. A device according to claim 8, **characterized in that** a sensor (20) is mounted at a specified location (20) in the container, which sensor (20) is capable of detecting whether or not liquid is present at that location (20).

10. A device according to any one of the claims 9 - 11, **characterized by** means (15) for regulating the residence time of the liquid in the vessel (1), which means control the discharge valve (9) in dependence on a detected liquid level and on the volume of the liquid supply flow.

11. A device according to any one of the claims 9 - 12, **characterized in that** a drivable stirrer (26) is present in said container.

## Patentansprüche

1. Verfahren zum Erhitzen einer Flüssigkeit in einem kontinuierlichen Verfahren, wobei die Flüssigkeit in einer Abwärtsrichtung in einem freien Fall von einer Trägerplatte (5) in einem geschlossenen Behälter (1) bewegt und aus dem Behälter (1) über eine Ablaßabsperrvorrichtung (9) herausgeführt wird, wobei Dampf zum Erhitzen der fallenden Flüssigkeit in den Behälter (1) eingeführt wird, welcher Dampf wenigstens teilweise in der Flüssigkeit kondensiert, wobei Flüssigkeit in einem Behältnis (7) am Boden des Behälters gesammelt wird, welche Flüssigkeit in dem Behältnis (7) für einige Zeit gelagert wird, bevor sie über die Ablaßabsperrvorrichtung (9) abgegeben wird, wobei das Niveau der Flüssigkeit in dem Behältnis (7) gemessen wird und die Ablaßabsperrvorrichtung (9) in Abhängigkeit des gemessenen Flüssigkeitsniveaus gesteuert wird, **dadurch gekennzeichnet, daß** das Niveau der Flüssigkeit durch ein Differentialdruckmeßgerät (15) gemessen wird, welches den Unterschied des Drucks im Behälter (1) zwischen einer Stelle (17) nahe der Bodenseite des Behältnisses (7) und einer Stelle (19) über dem Behältnis (7) mißt.

2. Verfahren nach Anspruch 1, **dadurch gekennzeichnet, daß** die Ablaßabsperrvorrichtung (9) auf eine solche Weise gesteuert wird, daß das Flüssigkeitsniveau auf einem konstanten vorgegebenen Wert gehalten wird.

3. Verfahren nach einem der vorangehenden Ansprüche, **dadurch gekennzeichnet, daß** es mittels eines Sensors (20) bestimmt wird, ob eine bestimmte Stelle (20) im Behältnis (7) unter oder über dem Flüssigkeitsniveau liegt.

4. Verfahren nach Anspruch 3, **dadurch gekennzeichnet, daß** das Mittel (15) zum Bestimmen des Flüssigkeitsniveaus im Behältnis (7) kalibriert wird durch Variieren des Flüssigkeitsniveaus während der Messung auf eine solche Weise, daß das Flüssigkeitsniveau die bestimmte Stelle (20) passiert.

5. Verfahren nach einem der vorangehenden Ansprüche, **dadurch gekennzeichnet, daß** die Verweilzeit der Flüssigkeit im Behälter (1) durch Messen des Flüssigkeitsversorgungsflusses und Einstellen eines vorgegebenen Flüssigkeitsniveaus in Abhängigkeit davon reguliert wird, was durchgeführt wird durch Steuern der Ablaßabsperrvorrichtung (9).

6. Verfahren nach einem der vorangehenden Ansprüche, **dadurch gekennzeichnet, daß** der Flüssigkeitsfluß zum Behälter während des Verfahrens vermindert wird, und daß das Flüssigkeitsniveau im Behältnis (7) anteilig zu der Verminderung **dadurch** vermindert wird.

7. Verfahren nach einem der vorangehenden Ansprüche, **dadurch gekennzeichnet, daß** die Flüssigkeit, die im Behältnis (7) gelagert wird, zusätzlich mittels eines Rührers (26) gerührt wird.

8. Vorrichtung zum Erhitzen einer Flüssigkeit in einem kontinuierlichen Verfahren, welche Vorrichtung einen geschlossenen Behälter (1), in dem die Flüssigkeit in einer Abwärtsrichtung in einem freien Fall von einer Trägerplatte (5) bewegt und aus dem Behälter (1) über eine Ablaßabsperrvorrichtung (9) herausgeführt werden kann, Mittel zum Liefern von Dampf in den Behälter (1) zum Erhitzen der fallenden Flüssigkeit umfaßt, wobei ein Behältnis (7) am Boden des Behälters (1) vorhanden ist, in welchem Behältnis (7) gefallene Flüssigkeit gesammelt und für einige Zeit gelagert werden kann, bevor sie über die Ablaßabsperrvorrichtung (9) abgegeben wird, und wobei die Vorrichtung ferner Mittel (15) zum Messen des Niveaus der Flüssigkeit im Behältnis (7) und Mittel (15) zum Steuern der Ablaßabsperrvorrichtung in Abhängigkeit von dem gemessenen Flüssigkeitsniveau umfaßt, **dadurch gekennzeichnet, daß** das Mittel zum Messen des Niveaus der Flüssigkeit im Behältnis (7) ein Differentialdruckmeßgerät (15), umfassend einen Sensor (17), der an einer Stelle (17) nahe der Bodenseite des Behältnisses (7) vorhanden ist, und einen Sensor (19), der an einer Stelle (19) über dem Behältnis (7) vorhanden ist, umfaßt.

9. Vorrichtung nach Anspruch 8, **dadurch gekennzeichnet, daß** ein Sensor (20) an einer bestimmten Stelle (20) im Behältnis montiert ist, welcher Sensor (20) detektieren kann, ob Flüssigkeit an dieser Stelle (20) vorhanden ist oder nicht.

10. Vorrichtung nach einem der Ansprüche 9 bis 11, **gekennzeichnet durch** Mittel (15) zum Regulieren der Verweilzeit der Flüssigkeit im Behälter (1), welches Mittel die Ablaßabsperrvorrichtung (9) in Abhängigkeit von einem detektierten Flüssigkeitsniveau und dem Volumen des Flüssigkeitsversorgungsflusses steuert.

11. Vorrichtung nach einem der Ansprüche 9 bis 12, **dadurch gekennzeichnet, daß** ein antreibbarer Rührer (26) in dem Behältnis vorhanden ist.

## Revendications

1. Procédé de chauffage d'un liquide dans une opération continue, dans lequel le liquide est déplacé afin qu'il descende en chute libre depuis une plaque d'alimentation (5) dans un réservoir fermé (1), et évacué du réservoir (1) par une vanne d'évacuation (9), dans lequel de la vapeur d'eau destinée à chauffer le liquide qui tombe est introduite dans le réservoir (1), et cette vapeur d'eau se condense au moins partiellement dans le liquide, dans lequel le liquide est collecté dans un récipient (7) placé à la partie inférieure du réservoir, le liquide étant stocké dans le récipient (7) pendant un certain temps avant d'être évacué par la vanne d'évacuation (9), et dans lequel le niveau de liquide dans le récipient (7) est mesuré et la vanne d'évacuation (9) est commandée en fonction du niveau de liquide mesuré,
**caractérisé en ce que** le niveau de liquide est mesuré à l'aide d'une jauge de pression différentielle (15) qui mesure la différence de pression dans le réservoir (1) entre un emplacement (17) proche du côté inférieur du récipient (7) et un emplacement (19) qui se trouve au-dessus du récipient (7).

2. Procédé selon la revendication 1, **caractérisé en ce que** la vanne d'évacuation (9) est commandée de manière que le niveau de liquide soit maintenu à une valeur constante prédéterminée.

3. Procédé selon l'une quelconque des revendications précédentes, **caractérisé en ce que** le fait qu'un emplacement spécifié (20) dans le récipient (7) est au-dessous ou au-dessus du niveau de liquide est déterminé par un capteur (20).

4. Procédé selon la revendication 3, **caractérisé en ce que** le dispositif (15) destiné à déterminer le niveau de liquide dans le récipient (7) est étalonné par variation du niveau de liquide pendant la mesure, d'une manière telle que le niveau de liquide passe à l'emplacement spécifié (20).

5. Procédé selon l'une quelconque des revendications précédentes, **caractérisé en ce que** le temps de séjour du liquide dans le réservoir (1) est régulé par mesure du débit d'alimentation en liquide et par réglage d'un niveau prédéterminé de liquide qui en dépend, l'opération étant effectuée par commande de la vanne d'évacuation (9).

6. Procédé selon l'une quelconque des revendications précédentes, **caractérisé en ce que** le débit de liquide transmis au réservoir est réduit pendant l'opération, et **en ce que** le niveau de liquide dans le récipient (7) est réduit en proportion de cette réduction de cette manière.

7. Procédé selon l'une quelconque des revendications précédentes, **caractérisé en ce que** le liquide qui est stocké dans le récipient (7) est en outre agité par un agitateur (26).

8. Appareil de chauffage d'un liquide dans une opération continue, l'appareil comprenant un réservoir fermé (1) dans lequel le liquide peut se déplacer en descendant en chute libre depuis une plaque d'alimentation (5) et sortir du réservoir (1) par une vanne d'évacuation (9), un dispositif de transmission de vapeur d'eau au réservoir (1) pour le chauffage du liquide qui tombe, dans lequel un récipient (7) est présent à la partie inférieure du réservoir (1), le liquide qui tombe pouvant être collecté et stocké pendant un certain temps dans le récipient (7) avant d'être évacué par la vanne d'évacuation (9), et dans lequel l'appareil comporte en outre un dispositif (15) de mesure du niveau de liquide dans le récipient (7) et un dispositif (15) de commande de la vanne d'évacuation en fonction du niveau mesuré de liquide, **caractérisé en ce que** le dispositif de mesure du niveau du liquide dans le récipient (7) comprend une jauge de pression différentielle (15) qui comporte un capteur (17) qui est présent à un emplacement (17) proche du côté inférieur du récipient (7) et un capteur (19) qui est présent à un emplacement (19) qui se trouve au-dessus du récipient (7).

9. Appareil selon la revendication 8, **caractérisé en ce qu'**un capteur (20) est monté à un emplacement spécifié (20) dans le récipient, ce capteur (20) étant capable de détecter le fait que le liquide est présent ou non audit emplacement (20).

10. Appareil selon l'une quelconque des revendications 9 à 11, **caractérisé par** un dispositif (15) de régulation du temps de séjour du liquide dans le réservoir (1), ce dispositif commandant la vanne d'évacuation (9) en fonction du niveau du type détecté et du volume du courant d'alimentation en liquide.

11. Dispositif selon l'une quelconque des revendications 9 à 12, **caractérisé en ce qu'**un agitateur (26) qui peut être entraîné est présent dans le récipient.
